# EUROPEAN PATENT SPECIFICATION

(11) **EP 3 148 383 B1**
(45) Date of publication and mention of the grant of the patent: **24.06.2020**
(21) Application number: 15802405.9
(22) Date of filing: 01.06.2015
(51) Int. Cl.: A47G 25/90, F16B 45/02, F16B 2/10

(54) **A DEVICE FOR ASSISTING TAKING OFF AND PUTTING ON A GARMENT**
VORRICHTUNG ZUR UNTERSTÜTZUNG DES AUSZIEHENS UND ANZIEHENS EINES KLEIDUNGSSTÜCKS
DISPOSITIF POUR AIDER À RETIRER ET À ENFILER UN VÊTEMENT

(30) Priority: 02.06.2014 SE 1450661
(43) Date of publication of application: 05.04.2017
(73) Proprietor: Norén, Per, 821 92 Bollnäs (SE)
(72) Inventor: Norén, Per, 821 92 Bollnäs (SE)
(74) Representative: Bjerkéns Patentbyrå KB (Gävle)
(86) International application number: PCT/SE2015/050633
(87) International publication number: WO 2015/187084

(56) References cited:
- EP-A1- 2 253 858
- WO-A1-2012/035299
- DE-C- 205 986
- FR-A1- 2 955 756
- FR-A7- 2 136 191
- GB-A- 2 322 537
- GB-A- 2 507 167
- US-A- 384 769
- US-A- 426 998
- US-A1- 2002 179 023
- US-A1- 2007 045 372

## Description

### FIELD OF THE INVENTION AND BACKGROUND ART

The present invention relates to a device for assisting taking off and putting on a garment with sleeves according to the preamble of claim 1.

The documents US 953,254 and US 817,755 describe a respective device intended to be used for assisting putting on a garment, such as a coat. Both of these devices are configured to be mounted on a support structure, such as a wall, and have a first hook part and a second hook part. The garment is to be hanged on the first hook part. The second hook part is brought toward the first hook part by means of the downwardly directed force consisting of the gravity of the garment on the first hook part and the garment is clamped between the first and the second hook part. A person may then put his arms into the sleeves of the garment and the second hook part returns to an upright position when the force consisting of the gravity of the garment is removed from the first hook part whereby the device is opened and the person may walk away wearing the garment.

Both of the devices are intended to function as dressing assistance tools. A force must be exerted downwardly on the devices described if they are to clamp a garment, which means that the user of the garment has to fasten a sleeve in the device and thereafter pull this downwardly from the device when desiring assistance in undressing.

This method is complicated, especially for persons with the greatest need of assistance in undressing, such as elderly, children or persons with reduced mobility, and the devices described are by that not suitable as undressing assistance tools. Furthermore, unnecessary wear damage on the sleeve arises which in the long run may result in holes therein, as the sleeve of the garment is fastened in a device and must be pulled downwardly. Another similar device is already known through the document DE205986C. However, this is not suitable as assistance tool by undressing either, but only as an assistance tool by dressing.

A device according to the preamble of claim 1 and of this type comprising a holding arrangement is already known through FR2136191 A7.

In addition to the deficiencies regarding their function, these devices consist of complex structures with several components resulting in high manufacturing costs and a big risk that any of the components breaks.

### THE OBJECT OF THE INVENTION

The object of the present invention is to provide a device for assisting taking off and putting on a garment with sleeves of the type defined in the introduction being improved in at least some aspect in relation to such devices previously known.

### SUMMARY OF THE INVENTION

The object is according to the invention achieved by a device having the features defined in claim 1.

The solution of a closing member according to the invention provides a possibility for a user of the garment to horizontally insert a part of a sleeve into the space of the base body of the device and to clamp the sleeve in the base body by pulling the sleeve in a horizontal direction away therefrom and thereby be able to pull one arm out of the garment in a way that is ergonomic for the user and also gentle for the garment as the sleeve in question does not have to be bent and pulled from inappropriate angles. Furthermore, the possibility of adjusting the height of the base body after the length of the user and based on whether the device is to be used for assisting taking off or putting on a garment is provided. In addition to the functional advantages with the device according to the invention this has a simple structure with few components resulting in low manufacturing costs and a long life span.

According to a preferred embodiment of the invention the closing member is hingedly connected to the outer end of the first portion of the base body. A distinctly defined opening to said space of the base body is provided hereby.

According to another preferred embodiment of the invention the contact surface of the closing member is provided with a friction layer, which friction layer enables a high friction force between the contact surface of the closing member and the part of the sleeve when the part of the sleeve is clamped between the contact surface of the closing member and the contact surface of the second portion, the friction layer preferably consisting of a rubber material. The risk that the part of the sleeve will slide out of the base body during use of the device is minimized by such a friction layer.

According to another preferred embodiment of the invention at least one of the first and the second portion of the base body comprises a friction surface which enables a high friction force between the base body and a garment when a garment is hanged over the base body, the friction surface preferably consisting of a rubber material. Such a friction surface simplifies the use of the device as an assistance tool for putting on a garment.

According to another preferred embodiment of the invention the closing member is configured to return to its closing position by the influence of gravity after being brought to the opening position. Closing of the space of the base body in an uncomplicated way is provided hereby.

According to another preferred embodiment of the invention it comprises a spring configured to bias the closing member toward its closing position. The possibility of mounting the base body in different angles in relation to the support structure without impairing the function of the closing member is provided hereby.

Further advantages as well as advantageous features of the invention will appear from the following description of embodiments of the invention.

### BRIEF DESCRIPTION OF THE DRAWINGS

With reference to the appended drawings, below follows a description of two embodiments of the invention cited as examples.

In the drawings:
- Fig. 1: is a simplified perspective view of a device not according to the invention, in which the base body is directly mounted on a support structure,
- Fig. 2: is a side elevation view of the device in Fig.1,
- Fig. 3: is a frontal view of the device in Fig. 1,
- Fig. 4: is a simplified perspective view of a device according to the invention, in which the base body is attached to a holding arrangement configured to be mounted on a support structure,
- Fig. 5: is a perspective view of the device in Fig. 4 with the base body in a slidable position,
- Fig. 6: is a perspective view of the device in Fig. 4 with the base body in a fixed position at the lower part of the holding arrangement, where a user of a jacket has inserted and clamped a part of a sleeve in the space of the base body,
- Fig. 7: is a view corresponding to Fig. 6, where the user of the jacket has pulled the arm out of the sleeve which is still clamped in the space of the base body, and
- Fig. 8: is a frontal view of the device in Figs. 4-7 with the base body in a fixed position at the upper part of the holding arrangement, where a jacket is hanging over the base body.

### DETAILED DESCRIPTION OF EMBODIMENTS OF THE INVENTION

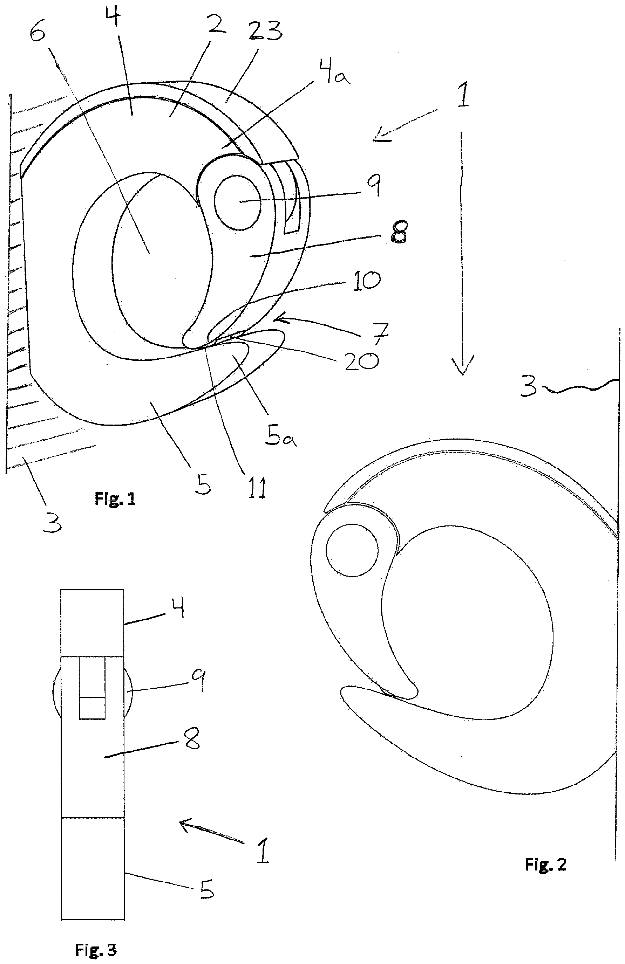

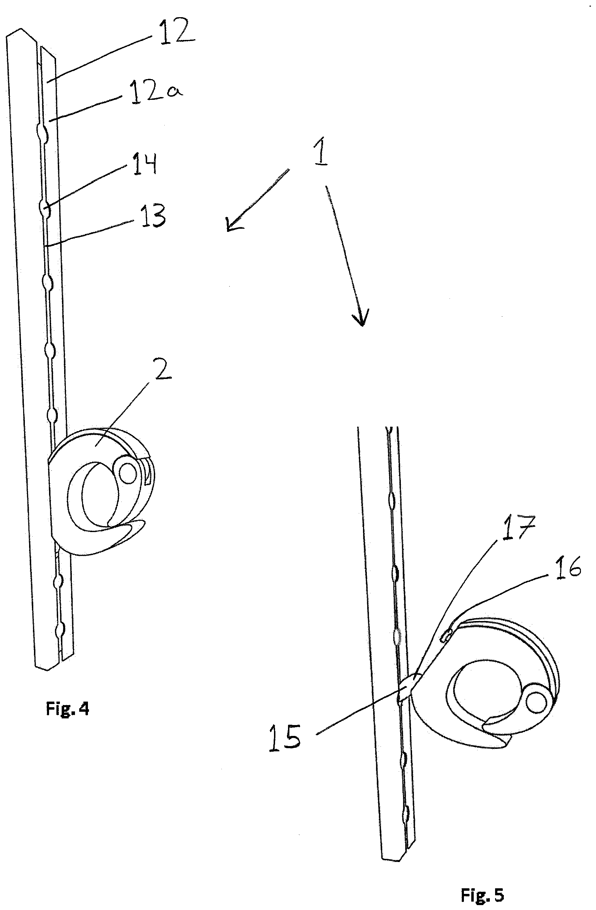

A device not according to the invention is shown in the appended Figures 1-3 and a device according to the invention in the Figures 4-8.

A device 1 is shown in Figs. 1-3 and comprises a base body 2 preferably made of wood, which is directly mounted on a support structure, such as a wall 3. The base body comprises a first portion 4 extending away from the wall and a second portion 5 located opposite to the first portion and extending away from the wall, between which portions a space 6 is provided. The first portion 4 has an outer end 4a facing away from the wall 3 and the second portion 5 has an outer end 5a facing away from the wall. An opening 7 to the space 6 is defined between these outer ends 4a, 5a.

A closing member 8 is connected to the outer end 4a of the first portion 4 via a hinge 9, so that the closing member is pivotable between an opening position in which it extends away from the opening 7 into the space 6 so that the opening of the space is opened, and a closing position in which a contact surface 10 of the closing member 8 facing away from the space abuts a contact surface 11 of the second portion 5 facing the space so that the opening 7 of the space 6 is closed. The closing member is configured to return to its closing position by the influence of gravity and/or by means of a spring arranged in the hinge 9 after being brought to the opening position. Such a spring is arranged in such a way that the closing member 8 is brought against the action of the spring when pivoting from the closing to the opening position.

A base body 2 and a closing member 8 corresponding to those in Figs. 1-3 are shown in Figs. 4-8. The base body in Figs. 4-8 is attached to a holding arrangement 12 which comprises a rail 12a configured to be mounted on the wall 3. The rail has an elongated groove 13 and a plurality of holes 14 connected to the groove, which are arranged at a distance from each other in the longitudinal direction of the groove. According to this embodiment of the invention, the base body 2 comprises a retaining member 15 and an engaging member 16 (see Fig. 5) arranged on the side of the base body facing the holding arrangement 12.

The engaging member 16 is formed as a hook and configured to engage with one of the holes 14 along the rail 12a. The base body 2 is adjusted into a fixed position at a determined height along the rail 12a when the engaging member is hooked into one of the holes. The retaining member 15 comprises a first part (not shown in the Figures) configured to be located in the groove 13 of the rail 12a and to retain the base body 2 at the rail, and a second part 17 configured to project from the groove when the engaging member 16 is unhooked from a hole 14 and the base body is tilted from the rail 12a. The retaining member may as an example have the shape of a T.

In order to displace the base body 2 vertically along the rail the engaging member 16 is unhooked from a hole 14 and the base body is tilted from the rail, but is retained at this by means of the retaining member 15 (see Fig. 5). The base body may then be slid along the groove 13 to a hole 14 at a desired height, into which hole the engaging member 16 is hooked and fixates the base body 2 relative to the rail 12a.

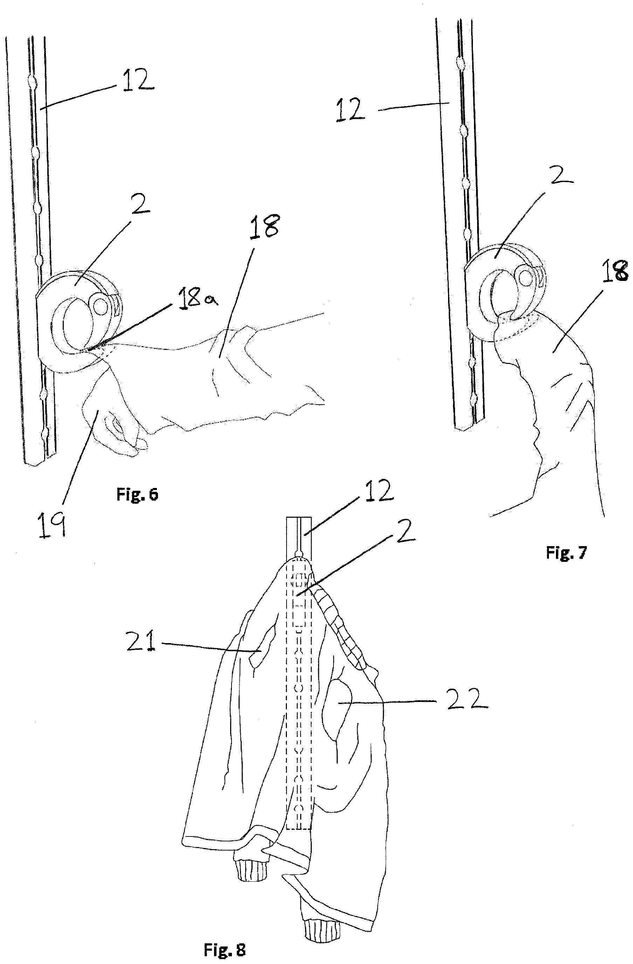

When the device 1 is to be used for assisting taking off a garment, such as a jacket, a part 18a of a sleeve 18 is brought into the space 6 of the base body 2 (see Fig. 6). A traction force away from the base body is created in the sleeve as the user of the jacket is trying to pull his arm 19 out of the sleeve 18, which traction force causes a friction force between the part 18a of the sleeve and the contact surfaces 10, 11 whereby the sleeve is clamped therebetween. The user of the jacket may without any problem pull his arm 19 out of the sleeve 18 when the sleeve has been clamped and the jacket will thereafter hang in the base body 2 until the user pushes the closing member 8 toward its opening position so that the sleeve is released.

The contact surface 10 is provided with a friction layer 20 so as to enable a high friction force between the contact surface 10 of the closing member 8 and the part 18a of the sleeve 18. The friction layer is according to this embodiment a rubber strip, but may also be constituted by another material than rubber. The contact surface 10 may also provide a relatively high coefficient of friction by means of its structure, e.g. by being grooved, undulated or consisting of members of fish-scale-type or nubbles. Additionally, the contact surface 11 of the second portion 5 may be provided with a said friction layer or be configured in such a way that a high coefficient of friction is provided, for a better ability of locking a part 18a of a sleeve to the base body 2 by friction.

When the device 1 is to be used for assisting putting on a jacket, the jacket is hanged over the base body 2 of the device in such a way that the inner opening 21 to one of the sleeves is easily accessible for the user (see Fig. 8), whereafter the user in a simple manner may bring an arm into this opening 21. The user may thereafter bring his other arm into the opening 22 to the other sleeve of the jacket without the jacket sliding away, as this hangs over the base body 2.

The top surface of the first portion 4 of the base body 2 is provided with a friction surface 23. The friction surface is according to this embodiment a rubber strip, but may also be constituted by another material than rubber. The friction surface 23 may also provide a relatively high coefficient of friction by means of its structure, e.g. by being grooved, undulated or consisting of members of fish-scale-type or nubbles.

The height of the base body 2 is adjusted after the function desired, as the base body is attached to the wall 3 by the rail 12a. When the device 1 is to be used for assisting taking off a garment the base body 2 should be set at about the height of the elbows of the user and when the device 1 is to be used for assisting putting on a garment the base body should instead be set at about the height of the cheek of the user. The device 1 may by the rail 12a also be adjusted after the heights of different users.

The invention is of course not in any way restricted to the embodiment thereof described above. On the contrary, many possibilities to modifications thereof will be apparent to a person with ordinary skill in the art without departing from the scope of the invention as defined in the appended claims.

The round shape of the base body and the closing member as shown in the Figures is not in any way intended to restrict the invention thereto. On the contrary, the base body and the closing member could also have for instance a square or oval shape and the space provided by the base body may also have a different shape than that shown in the Figures.

The holding arrangement could be configured in a plurality of different ways while providing the function of the base body being adjustable between different heights therealong. The receiving members could for instance be protruding loops or some other type of receiving members.

## Claims

1. A device (1) for assisting taking off and putting on a garment with sleeves (18), comprising:
- a base body (2) configured to be mounted on a support structure (3), the base body (2) comprising a first portion (4) extending away from the support structure (3) and a second portion (5) located opposite to the first portion (4) and extending away from the support structure (3) between which portions a space (6) is provided, which portions (4, 5) each has an outer end (4a, 5a) facing away from the support structure (3), wherein an opening (7) for insertion of a part (18a) of a sleeve (18) of the garment into the space (6) is provided between the outer end (4a) of the first portion (4) and the outer end (5a) of the second portion (5),
- a closing member (8) hingedly connected to the first portion (4) of the base body (2), and
- a holding arrangement (12) configured to connect the base body (2) to the support structure (3), wherein the base body (2) is adjustable into different heights along the holding arrangement (12),
**characterized in that**
the closing member (8) is pivotable between an opening position in which it extends away from the opening (7) into the space (6) so as to allow a part (18a) of a sleeve (18) to be inserted therein, and a closing position in which a contact surface (10) of the closing member (8) facing away from the space (6) abuts a contact surface (11) of the second portion (5) of the base body (2) facing the space (6) in such a way that a part (18a) of a sleeve (18) which has been inserted into the space (6) is clamped between the closing member (8) and the second portion (5) by friction against these contact surfaces (10, 11) when a user of the garment pulls the sleeve (18) in a direction away from the opening (7), and **in that** the holding arrangement (12) comprises an elongated element (12a) with a groove (13) extending along the longitudinal direction of the element (12a), the base body (2) is configured to be fastened in the groove (13), and the base body (2) comprises a retaining member (15) configured to be inserted into the groove (13) of the element (12a) and to retain the base body (2) at the element (12a), and an engaging member (16) configured to be received in and secure the base body (2) to one of a plurality of receiving members (14) arranged at different heights along the element (12a), so that the base body (2) is adjustable between a fixed position in which the engaging member (16) is received in a receiving member (14) and secures the base body (2) at a determined height along the element (12a), and a slidable position in which the engaging member (16) is released from the receiving member (14) and the base body (2) is vertically slidable along the element (12a) via the retaining member (15).

2. A device (1) according to claim 1, **characterized in that** the closing member (8) is hingedly connected to the outer end (4a) of the first portion (4) of the base body (2).

3. A device (1) according to any of the preceding claims, **characterized in that** the contact surface (10) of the closing member (8) is provided with a friction layer (20), which friction layer (20) enables a high friction force between the contact surface (10) of the closing member (8) and the part (18a) of the sleeve (18) when the part (18a) of the sleeve (18) is clamped between the contact surface (10) of the closing member (8) and the contact surface (11) of the second portion (5), the friction layer (20) preferably consisting of a rubber material.

4. A device (1) according to any of the preceding claims, **characterized in that** at least one of the first (4) and the second portion (5) of the base body (2) comprises a friction surface (23) which enables a high friction force between the base body (2) and a garment when a garment is hanged over the base body (2), the friction surface (23) preferably consisting of a rubber material.

5. A device (1) according to any of the preceding claims, **characterized in that** the base body (2) is mainly made of wood.

6. A device (1) according to any of the claims 1 to 5, **characterized in that** the closing member (8) is configured to return to its closing position by the influence of gravity after being brought to the opening position.

7. A device (1) according to any of the claims 1 to 6, **characterized in that** it comprises a spring configured to bias the closing member (8) toward its closing position.

## Patentansprüche

1. Vorrichtung (1) zum Unterstützen eines Ausziehens und Anziehens eines Kleidungsstücks mit Ärmeln (18), umfassend:
- einen Basiskörper (2), der zur Montage an einem Trägeraufbau (3) konfiguriert ist, wobei der Basiskörper (2) einen ersten Abschnitt (4), der sich von dem Trägeraufbau (3) wegerstreckt, und einen zweiten Abschnitt (5) umfasst, der dem ersten Abschnitt (4) gegenüberliegend angeordnet ist und sich von dem Trägeraufbau (3) wegerstreckt, wobei zwischen den Abschnitten ein Raum (6) vorgesehen ist, wobei die Abschnitte (4, 5) jeweils ein äußeres Ende (4a, 5a) aufweisen, das von dem Trägeraufbau (3) weg weist, wobei eine Öffnung (7) zum Einsetzen eines Teils (18a) eines Ärmels (18) des Kleidungsstücks in den Raum (6) zwischen dem Außenende (4a) des ersten Abschnitts (4) und dem Außenende (5a) des zweiten Abschnitts (5) vorgesehen ist,
- ein Schließelement (8), das gelenkig mit dem ersten Abschnitt (4) des Basiskörpers (2) verbunden ist, und
- eine Halteanordnung (12), die zur Verbindung des Basiskörpers (2) mit dem Trägeraufbau (3) konfiguriert ist, wobei der Basiskörper (2) in verschiedenen Höhen entlang der Halteanordnung (12) einstellbar ist,
**dadurch gekennzeichnet, dass**
das Schließelement (8) zwischen einer Öffnungsposition, in der es sich von der Öffnung (7) in den Raum (6) wegerstreckt, um so ein Einsetzen eines Teils (18a) eines Ärmels (18) darin zu ermöglichen, und einer Schließposition schwenkbar ist, in der eine Kontaktfläche (10) des Schließelements (8), die von dem Raum (6) weg weist, mit einer Kontaktfläche (11) des zweiten Abschnitts (5) des Basiskörpers (2), der zu dem Raum (6) weist, auf solche Weise in Anlage ist, dass ein Teil (18a) eines Ärmels (18), das in den Raum (6) eingesetzt worden ist, zwischen das Schließelement (8) und den zweiten Abschnitt (5) durch Reibung gegen diese Kontaktflächen (10, 11) geklemmt ist, wenn ein Nutzer des Kleidungsstücks den Ärmel (18) in einer Richtung weg von der Öffnung (7) zieht, und dass die Halteanordnung (12) ein längliches Element (12a) mit einer Nut (13) umfasst, die sich entlang der Längsrichtung des Elements (12a) erstreckt, wobei der Basiskörper (2) zur Anbringung in der Nut (13) konfiguriert ist und der Basiskörper (2) ein Halteelement (15), das zum Einsetzen in die Nut (13) des Elements (12a) und zum Halten des Basiskörpers (2) an dem Element (12a) konfiguriert ist, und ein Eingriffselement (16) umfasst, das zur Aufnahme in und zur Anbringung des Basiskörpers (2) an einem einer Mehrzahl von Aufnahmeelementen (14) konfiguriert ist, die unter verschiedenen Höhen entlang des Elements (12a) angeordnet sind, so dass der Basiskörper (2) zwischen einer fixierten Position, in der das Eingriffselement (16) in einem Aufnahmeelement (14) aufgenommen ist und den Basiskörper (2) auf einer vorbestimmten Höhe entlang des Elements (12a) anbringt, und einer gleitenden Position einstellbar ist, in der das Eingriffselement (16) von dem Aufnahmeelement (14) freigegeben ist und der Basiskörper (2) vertikal entlang des Elements (12a) über das Halteelement (15) verschiebbar ist.

2. Vorrichtung (1) nach Anspruch 1, **dadurch gekennzeichnet, dass** das Schließelement (8) gelenkig mit dem Außenende (4a) des ersten Abschnitts (4) des Basiskörpers (2) verbunden ist.

3. Vorrichtung (1) nach einem der vorhergehenden Ansprüche, **dadurch gekennzeichnet, dass** die Kontaktfläche (10) des Schließelements (8) mit einer Reibungsschicht (20) versehen ist, wobei die Reibungsschicht (20) eine hohe Reibungskraft zwischen der Kontaktfläche (10) des Schließelements (8) und dem Teil (18a) des Ärmels (18) ermöglicht, wenn das Teil (18a) des Ärmels (18) zwischen die Kontaktfläche (10) des Schließelements (8) und die Kontaktfläche (11) des zweiten Abschnitts (5) geklemmt ist, wobei die Reibungsschicht (20) bevorzugt aus einem Gummimaterial besteht.

4. Vorrichtung (1) nach einem der vorhergehenden Ansprüche, **dadurch gekennzeichnet, dass** zumindest einer des ersten (4) und zweiten Abschnitts (5) des Basiskörpers (2) eine Reibungsfläche (23) umfasst, die eine hohe Reibungskraft zwischen dem Basiskörper (2) und einem Kleidungsstück ermöglicht, wenn ein Kleidungsstück über den Basiskörper (2) gehängt ist, wobei die Reibungsfläche (23) bevorzugt aus einem Gummimaterial besteht.

5. Vorrichtung (1) nach einem der vorhergehenden Ansprüche, **dadurch gekennzeichnet, dass** der Basiskörper (2) hauptsächlich aus Holz hergestellt ist.

6. Vorrichtung (1) nach einem der Ansprüche 1 bis 5, **dadurch gekennzeichnet, dass** das Schließelement (8) derart konfiguriert ist, dass es durch den Einfluss von Schwerkraft, nachdem es in die Öffnungsposition gebracht worden ist, in die Schließposition zurückkehrt.

7. Vorrichtung (1) nach einem der Ansprüche 1 bis 6, **dadurch gekennzeichnet, dass** sie eine Feder umfasst, die derart konfiguriert ist, das Schließelement (8) in Richtung seiner Schließposition vorzuspannen.

## Revendications

1. Dispositif (1) destiné à aider à retirer et à enfiler un vêtement à manches (18), comportant :
- un corps de base (2) configuré pour être monté sur une structure de support (3), le corps de base (2) comportant une première portion (4) s'étendant à distance de la structure de support (3) et une seconde portion (5) située de manière opposée à la première portion (4) et s'étendant à distance de la structure de support (3), entre lesquelles portions un espace (6) est prévu, lesquelles portions (4, 5) présentant chacune une extrémité extérieure (4a, 5a) en regard et à distance de la structure de support (3), dans lequel une ouverture (7) pour l'insertion d'une partie (18a) d'une manche (18) du vêtement dans l'espace (6) est prévue entre l'extrémité extérieure (4a) de la première portion (4) et l'extrémité extérieure (5a) de la seconde portion (5),
- un membre de fermeture (8) relié de manière articulée à la première portion (4) du corps de base (2), et
- un agencement de maintien (12) configuré pour relier le corps de base (2) à la structure de support (3), dans lequel le corps de base (2) peut être réglé à différentes hauteurs le long de l'agencement de maintien (12),
**caractérisé en ce que**
le membre de fermeture (8) peut pivoter entre une position d'ouverture dans laquelle il s'étend à distance de l'ouverture (7) dans l'espace (6) de manière à permettre à une partie (18a) d'une manche (18) d'être insérée dans celui-ci, et une position de fermeture dans laquelle une surface de contact (10) du membre de fermeture (8) en regard de l'espace (6) vient en butée contre une surface de contact (11) de la seconde portion (5) du corps de base (2) en regard de l'espace (6) de telle sorte qu'une partie (18a) d'une manche (18) qui a été insérée dans l'espace (6) est pincée entre le membre de fermeture (8) et la seconde portion (5) par frottement contre ces surfaces de contact (10, 11) lorsqu'un utilisateur du vêtement tire sur la manche (18) dans une direction à distance de l'ouverture (7), et **en ce que** l'agencement de maintien (12) comporte un élément allongé (12a) avec une rainure (13) s'étendant le long de la direction longitudinale de l'élément (12a), le corps de base (2) est configuré pour être fixé dans la rainure (13), et le corps de base (2) comporte un membre de retenue (15) configuré pour être inséré dans la rainure (13) de l'élément (12a) et pour retenir le corps de base (2) au niveau de l'élément (12a), et un membre d'engagement (16) configuré pour être reçu dans le corps de base (2) et pour sécuriser celui-ci sur un membre parmi la pluralité de membres de réception (14) agencés à différentes hauteurs le long de l'élément (12a), de sorte que le corps de base (2) peut être réglé entre une position fixe, dans laquelle le membre d'engagement (16) est reçu dans un membre de réception (14) et sécurise le corps de base (2) à une hauteur déterminée le long de l'élément (12a), et une position qui peut coulisser, dans laquelle le membre d'engagement (16) est libéré du membre de réception (14) et le corps de base (2) peut coulisser verticalement le long de l'élément (12a) par le biais du membre de retenue (15).

2. Dispositif (1) selon la revendication 1, **caractérisé en ce que** le membre de fermeture (8) est relié de manière articulée à l'extrémité extérieure (4a) de la première portion (4) du corps de base (2).

3. Dispositif (1) selon une quelconque des revendications précédentes, **caractérisé en ce que** la surface de contact (10) du membre de fermeture (8) est prévue avec une couche de frottement (20), laquelle couche de frottement (20) permet une force de frottement élevée entre la surface de contact (10) du membre de fermeture (8) et la partie (18a) de la manche (18) lorsque la partie (18a) de la manche (18) est pincée entre la surface de contact (10) du membre de fermeture (8) et la surface de contact (11) de la seconde portion (5), la couche de frottement (20) consistant de préférence en un matériau en caoutchouc.

4. Dispositif (1) selon une quelconque des revendications précédentes, **caractérisé en ce qu'**au moins une portion parmi la première (4) et la seconde portion (5) du corps de base (2) comporte une surface de frottement (23) qui permet une force de frottement élevée entre le corps de base (2) et un vêtement lorsqu'un vêtement est accroché au-dessus du corps de base (2), la surface de frottement (23) consistant de préférence en un matériau en caoutchouc.

5. Dispositif (1) selon une quelconque des revendications précédentes, **caractérisé en ce que** le corps de base (2) est principalement composé de bois.

6. Dispositif (1) selon une quelconque des revendications 1 à 5, **caractérisé en ce que** le membre de fermeture (8) est configuré pour retourner dans sa position de fermeture sous l'influence de la gravité après avoir été amené dans la position d'ouverture.

7. Dispositif (1) selon une quelconque des revendications 1 à 6, **caractérisé en ce qu'**il comporte un ressort configuré pour solliciter le membre de fermeture (8) vers sa position de fermeture.
